# EUROPEAN PATENT APPLICATION

(11) **EP 4 712 571 A1**
(43) Date of publication of application: **18.03.2026**
(21) Application number: 23944067.0
(22) Date of filing: 06.07.2023
(51) Int. Cl.: H04W 40/22, H04W 68/02, H04W 72/25

(54) **WIRELESS COMMUNICATION METHOD, USER EQUIPMENT AND NETWORK DEVICE**

(71) Applicant: GUANGDONG OPPO MOBILE TELECOMMUNICATIONS CORP., LTD., Dongguan, Guangdong 523860 (CN)
(72) Inventor: LU, Qianxi, Dongguan, Guangdong 523860 (CN); LENG, Bingxue, Dongguan, Guangdong 523860 (CN)
(74) Representative: Grassi, Stefano
(86) International application number: PCT/CN2023/106060
(87) International publication number: WO 2025/007340

(57) **Abstract**

Provided are a wireless communication method, a user equipment (UE) and a network device. The method comprises: a remote UE sending a request message to a first relay UE, wherein the request message is used for requesting, from the first relay UE, a first message which is sent by a network device. The introduction of a request message facilitates a remote UE in obtaining a message, which is sent by a network device.

## Description

### TECHNICAL FIELD

The present disclosure relates to the technical field of communication, and more particularly, relates to a wireless communication method, a user equipment (UE), and a network device.

### BACKGROUND

In the scenario of UE-to-network relay (U2N relay), how the remote UE obtains the message sent by the network device is a problem to be solved.

### SUMMARY

The present disclosure provides a wireless communication method, a user equipment, and a network device. Various aspects of the present disclosure are described below.

A first aspect provides a wireless communication method, and the method includes operations as follows. A remote UE sends a request message to a first relay UE. The request message is used to request, from the first relay UE, a first message sent by a network device.

A second aspect provides a wireless communication method, and the method includes operations as follows. A first relay UE receives a request message sent by a remote UE. The request message is used to request, from the first relay UE, a first message sent by a network device.

A third aspect provides a wireless communication method, and the method includes operations as follows. A network device receives a request message sent by a remote UE through one or more relay UEs. The request message is used to request, from a first relay UE of the one or more relay UEs, a first message sent by the network device.

A fourth aspect provides a UE, and the UE is a remote UE. The remote UE includes a communication module configured to send a request message to a first relay UE, and the request message is used to request, from the first relay UE, a first message sent by a network device.

A fifth aspect provides a UE, and the UE is a first relay UE. The first relay UE includes a communication module configured to receive a request message sent by a remote UE, and the request message is used to request, from the first relay UE, a first message sent by a network device.

A sixth aspect provides a network device. The network device includes a communication module configured to receive a re quest message sent by a remote UE through one or more relay UEs, and the request message is used to request, from a first relay UE of the one or more relay UEs, a first message sent by the network device.

A seventh aspect provides a UE including a transceiver, a processor and a memory for storing a program. The processor is configured for invoking the program stored in the memory and controlling the transceiver to receive or send a signal, to cause the UE to perform the method of the first aspect or the second aspect.

An eighth aspect provides a network device including a transceiver, a processor and a memory for storing a program. The processor is configured for invoking the program stored in the memory and controlling the transceiver to receive or send a signal, to cause the network device to perform the method of the third aspect.

A ninth aspect provides an apparatus, including a processor that invokes a program from a memory to cause the apparatus to perform the method of the first aspect, the second aspect, or the third aspect.

A tenth aspect provides a chip, including a processor that invokes a program from a memory to cause a device on which the chip is mounted to perform the method of the first aspect, the second aspect, or the third aspect.

An eleventh aspect provides a computer-readable storage medium for storing a program that causes a computer to perform the method of the first aspect, the second aspect, or the third aspect.

A twelfth aspect provides a computer program product including a program that causes a computer to perform the method of the first aspect, the second aspect, or the third aspect.

A thirteenth aspect provides a computer program that causes a computer to perform the method of the first aspect, the second aspect, or he third aspect.

In the embodiments of the present disclosure, the remote UE sends a request message to the relay UE to request the message sent by the network device. The request message is beneficial for the remote UE to obtain the message sent by the network device.

### BRIEF DESCRIPTION OF THE DRAWINGS

FIG. 1 is an example diagram of a system architecture to which a wireless communication system according to an embodiment of the present disclosure is applicable;
FIG. 2A is an example diagram of one possible resource allocation method in a sidelink communication scenario;
FIG. 2B is an example diagram of another possible resource allocation method in a sideline communication scenario;
FIG. 3 is a schematic flowchart of a wireless communication method according to an embodiment of the present disclosure;
FIG. 4 is a flowchart of one possible implementation of the method shown in FIG. 3;
FIG. 5 is a flowchart of another possible implementation of the method shown in FIG. 3;
FIG. 6 is a flowchart of another possible implementation of the method shown in FIG. 3;
FIG. 7 is a schematic structural diagram of a UE according to an embodiment of the present disclosure;
FIG. 8 is a schematic structural diagram of a UE according to another embodiment of the present disclosure;
FIG. 9 is a schematic structural diagram of a network device according to an embodiment of the present disclosure; and
FIG. 10 is a schematic diagram of an apparatus according to an embodiment of the present disclosure.

### DETAILED DESCRIPTION

Hereinafter, technical solutions in the present disclosure will be described with reference to the accompanying drawings.

### Wireless communication system

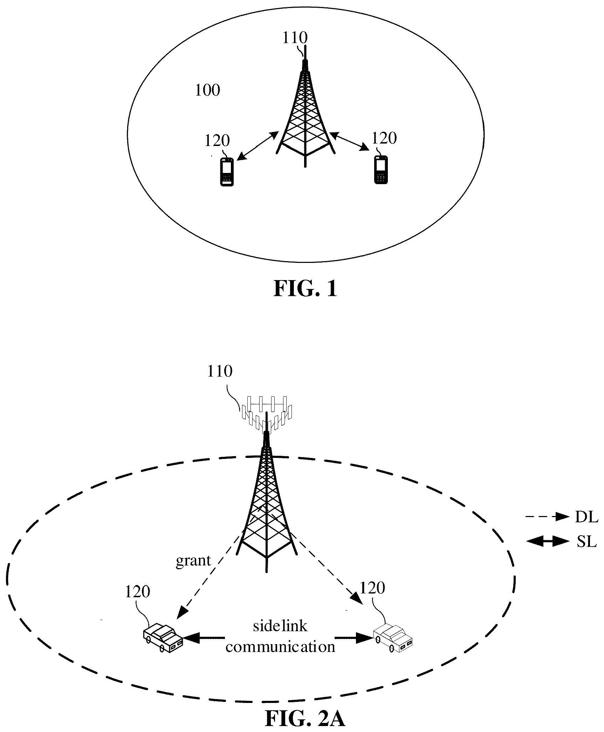

FIG. 1 is an example diagram of a system architecture to which a wireless communication system 100 according to an embodiment of the present disclosure is applicable. The wireless communication system 100 may include a network device 110 and a UE 120. The network device 110 may be a device which communicates with the UE 120. The network device 110 may provide network coverage for a particular geographic area and may communicate with UE 120 within the coverage area. The UE 120 may access a network (such as a wireless network) through the network device 110. Optionally, the wireless communication system 100 may further include other network entities such as a network controller and a mobility management entity, which is not limited in the embodiments of the present application.

It should be understood that the technical solutions of the embodiments of the present disclosure may be applied to various communication systems, such as a fifth generation (5G) system or a new radio (NR) system, a long-term evolution (LTE) system, an LTE frequency division duplex (FDD) system, an LTE time division duplex (TDD), and the like. The technical solution provided in the present disclosure may also be applied to future communication systems, such as a sixth-generation mobile communication system, a satellite communication system, and the like.

The UE in the embodiment of the present disclosure may also be referred to as a terminal device, an access terminal, a user unit, a user station, a mobile station, a mobile station (MS), a mobile terminal (MT), a remote station, a remote terminal, a mobile device, a user terminal, a terminal, a wireless communication device, a user agent, or a user device. The UE in the embodiment of the present disclosure may be a device that provides voice and/or data connectivity to a user, and may be used to connect person, objects, and machines, for example, a handheld device and a vehicle-mounted device having a wireless connection function, or the like. The UE in the embodiment of the present disclosure may be a mobile phone, a Pad, a notebook computer, a handheld computer, a mobile internet device (MID), a wearable device, a virtual reality (VR) device, an augmented reality (AR) device, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, or the like. Optionally, the UE may be used as a base station. For example, a UE may act as a scheduling entity that provides sidelink signals between UEs in vehicle to everything (V2X) or device to device (D2D), etc. For example, cellular telephones and automobiles communicate with each other using sidelink signals. The cellular telephone communicates with the smart home device without relaying the communication signals through a base station.

The network device in the embodiment of the present disclosure may be a device for communicating with a UE. The network device may be, for example, an access network device or a radio access network device. For example, the network device may be a base station. The base station may broadly cover or be replaced with various names of a NodeB, an evolved NodeB (eNB), a next generation NodeB (gNB), a relay station, an access point, a transmitting and receiving point (TRP), a transmitting point (TP), a home base station, a network controller, an access node, a wireless node, an access point (AP), a transmission node, a transceiver node, a base band unit(BBU), a remote radio unit (RRU), an active antenna unit (AAU), a remote radio head (RRH), a central unit (CU), a distributed unit (DU), a positioning node, and the like. The base station may be a macro base station, a micro base station, a relay node, a donor node, or the like, or a combination of them.

### LTE D2D/V2X

The UEs may communicate with each other through a sidelink. The sidelink communication may also be referred to as a proximity services (ProSe) communication, a unilateral communication, a sidechain communication, a device to device (D2D) communication.

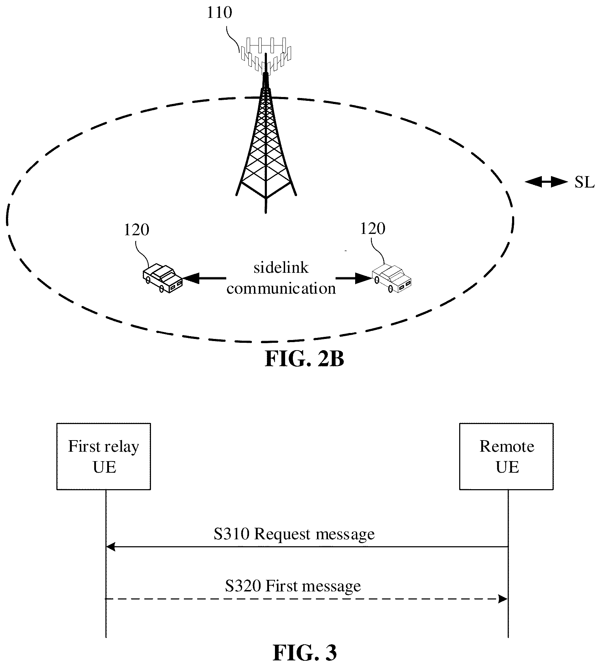

Different from the traditional cellular system where communication data is received or sent through the network device, D2D communication adopts a direct UE-to-UE communication mode, and thus has higher spectrum efficiency and lower transmission delay. The 3rd generation partnership project (3GPP) defines two transmission modes: mode A and mode B. FIG. 2A exemplarily illustrates mode A of a sidelink transmission technology. In mode A, the transmission resources of the UE 120 are allocated by the network device 110, and the UE 120 sends data on the sidelink according to the resources allocated by the network device. The network device 110 may allocate resources for a single transmission to the UE 120, or may allocate resources for a semi-static transmission to the UE 120. FIG. 2B exemplarily illustrates mode B of a sidelink transmission technology. In mode B, the UE 120 selects resources in the resource pool for data transmission.

In 3GPP, the D2D communication is divided into the following different stages for research.

The first stage is ProSe. In Rel-12/13, the D2D communication is studied for the ProSe project. The ProSe project mainly aims at public safety businesses. In the ProSe project, the position of the resource pool in the time domain may be configured, for example, the resource pool is discontinuous in the time domain, the UE can send/receive data discontinuously on the sidelink, thereby achieving the effect of power saving.

The second stage is V2X. In Rel-14/15, the Internet of Vehicles communication scenarios are studied mainly for services of vehicle-to-vehicle communication and vehicle-person communication with high movement speed. The power efficiency of the UE is not the main problem in the Internet of Vehicles system because the vehicle-mounted system has continuous power supply. The main problem of the Internet of Vehicles system is the delay of the data transmission, and the UE is required to send and receive continuously in the system design.

The third stage is Further Enhancements to LTE Device to Device (FeD2D). In Rel-14, the scenario in which the wearable device accesses the network device through the UE (such as the mobile phone) is studied. This research mainly focuses on scenarios with low movement speed and low power access. In the pre-research stage of FeD2D, the 3GPP conclusion is that the network device can configure the discontinuous reception (DRX) parameter of the remote UE through a relay UE, but the 3GPP did not elaborate on or reach a conclusion on the details of how to configure the DRX.

The fourth stage is multi-carrier. In Rel-15 LTE V2X, a multi-carrier mechanism is introduced. The multi-carrier mechanism is reflected in that the UE can support packet segmentation, so as to transmit the packet through multiple carriers to improve the data transmission rate. Alternatively, the UE may perform packet replication, to replicate multiple (e.g., two) packets of one packet. Then, the UE may respectively send the multiple packets using multiple carriers, thereby improving the reliability of transmission.

Regarding the packet replication, V2X supports the UE to perform sidelink packet replication (or sidelink group replication) at the packet data convergence protocol (PDCP) layer. For example, a PDCP packet data unit (PDU) may be duplicated at a PDCP entity (PDCP duplication), and two packet data protocol (PDP) PDUs duplicated by the same PDCP entity are submitted to two different radio link control (RLC) entities and respectively associated to two different sidelink logical channels. Different PDP PDUs duplicated by the same PDCP entity are only allowed to be transmitted on different sidelink carriers.

The UE may activate or deactivate the packet replication function of the sidelink based on the (pre)configuration. The sidelink packet replication is not applicable to transmissions with a Rel-14 transmission profile (see TS 23.285). A ProSe per-packet reliability (PPPR) value that supports the sidelink packet replication can be (pre)configured by a PPPR threshold. For the manner where the UE autonomously performs resource selection and the resource allocation manner based on network device scheduling, the UE performs sidelink packet replication on packets having the configured PPPR value until the configuration of packet replication corresponding to the PPPR value is cancelled. Further, in the resource allocation manner based on network device scheduling, the UE may report the data amount of the packets associated with one or more PPPR values and the destination of the packets through a sidelink buffer status report (BSR). The mapping of the PPPR value to the logical channel group may be configured by the network device, and the PPPR value is reflected by the logical channel group identity (ID) associated with the PPPR value included in the sidelink BSR. The list of one or more PPPR values may be reported in sidelink UE information by a UE in a radio resource control (RRC) connection.

### NR V2X

NR V2X is based on LTE V2X, and not limited to broadcast scenarios, but further expands to unicast and multicast scenarios, and studies the application of V2X in these scenarios.

Similar to LTE V2X, NR V2X also defines two resource allocation modes: mode 1 and mode 2. Further, the UE may be in a hybrid mode. That is, the UE may perform resource acquisition based on mode 1 and also may perform resource acquisition based on mode 2. The manner of resource acquisition may be indicated by a sidelink grant manner. For example, a time-frequency location of a physical sidelink control channel (PSCCH) and a physical sidelink shared channel (PSSCH) resource may be indicated using a sidelink grant.

Unlike LTE V2X, in addition to feedback-free and UE-autonomously initiated hybrid automatic repeat request (HARQ) retransmission, NR V2X also introduces feedback-based HARQ retransmission. The feedback-based HARQ retransmission may be applied to unicast communications as well as multicast communications.

Similar to LTE V2X, power efficiency is not a main problem faced by NR V2X due to continuous power supply capability of the vehicle-mounted system. The main problem faced by NR V2X is the delay of data transmission. Therefore, NR V2X requires UE to send and receive continuously in the system design.

A UE in sidelink communication may trigger an RRC reconfiguration process of the sidelink in one or more of the following scenarios: a sidelink data bearer is released in unicast communication; a sidelink data bearer is established in unicast communication; a related configuration of a sidelink data bearer is modified in the unicast communication; a PC5 relay RLC channel between a Layer 2 relay UE and a remote UE in a U2N relay scenario; a PC5 relay RLC channel between a Layer 2 relay UE and a remote UE is established in a U2N relay scenario; configuration parameters related to a PC5 relay RLC channel between a Layer 2 relay UE and a remote UE is modified in a U2N relay scenario; the reconfiguration of related parameters is measured and reported in the NR Sidelink ; the sidelink channel state information (CSI) reference signal resources and CSI reporting delay boundaries are reconfigured; and sidelink DRX for the peer UE is reconfigured.

### U2N relay

The remote UE performs measurement and reporting, and includes information such as a relay UE identity, a serving cell identity, and a measured reference signal receiving power (RSRP) or other information in the measurement and reporting information. When the remote UE performs link switching from the non-direct path to the direct path, the remote UE may measure the sidelink by using the sidelink reference signal receiving power (SL-RSRP). When the remote UE performs link switching from the direct path to the non-direct path, the remote UE may measure the sidelink by using the sidelink discovery reference signal receiving power (SL-RSRP). In addition, when measurement reporting is performed, two measurement and reporting trigger events as follows are defined for the switching of the UE to the relay UE of the network.

In the event 1 that when the link quality of the relay UE is lower than the configured threshold value, and optionally, the link quality of the neighboring cell is higher than the configured threshold value, the remote UE performs measurement and reporting.

In the event 2 that when the link quality of the serving cell is lower than the configured threshold value, and optionally, the link quality of the relay UE is higher than the configured threshold value, the remote UE performs measurement and reporting.

In addition, a timer is introduced in order to assist the remote UE in switching from the direct link to the non-direct link. When the remote UE receives an RRC reconfiguration message indicating a switching from a direct link to non-direct link, the remote UE turns on the timer. When the timer times out, the remote UE performs a RRC reestablishment.

In the U2N relay, the network device configures a bearer identity for end-to-end data transmission of the relay UE for the remote UE and the relay UE, and additionally configures bearer parameters on the PC5 interface between the relay UE and the remote UE. Meanwhile, in the configuration of the sidelinkRelay Adaptation Protocol (SRAP) layer, the network device maps the bearer identity with the PC5 RLC channel ID (see SL-SRAP-Config information element and SL-RLC-ChannelConfig information element hereinafter). The relay UE can know the configuration information used by the remote UE through the PC5 RLC channel identity. However, the relay UE cannot know the information about the QoS of the service which is transmitted by the remote UE using the configuration information.

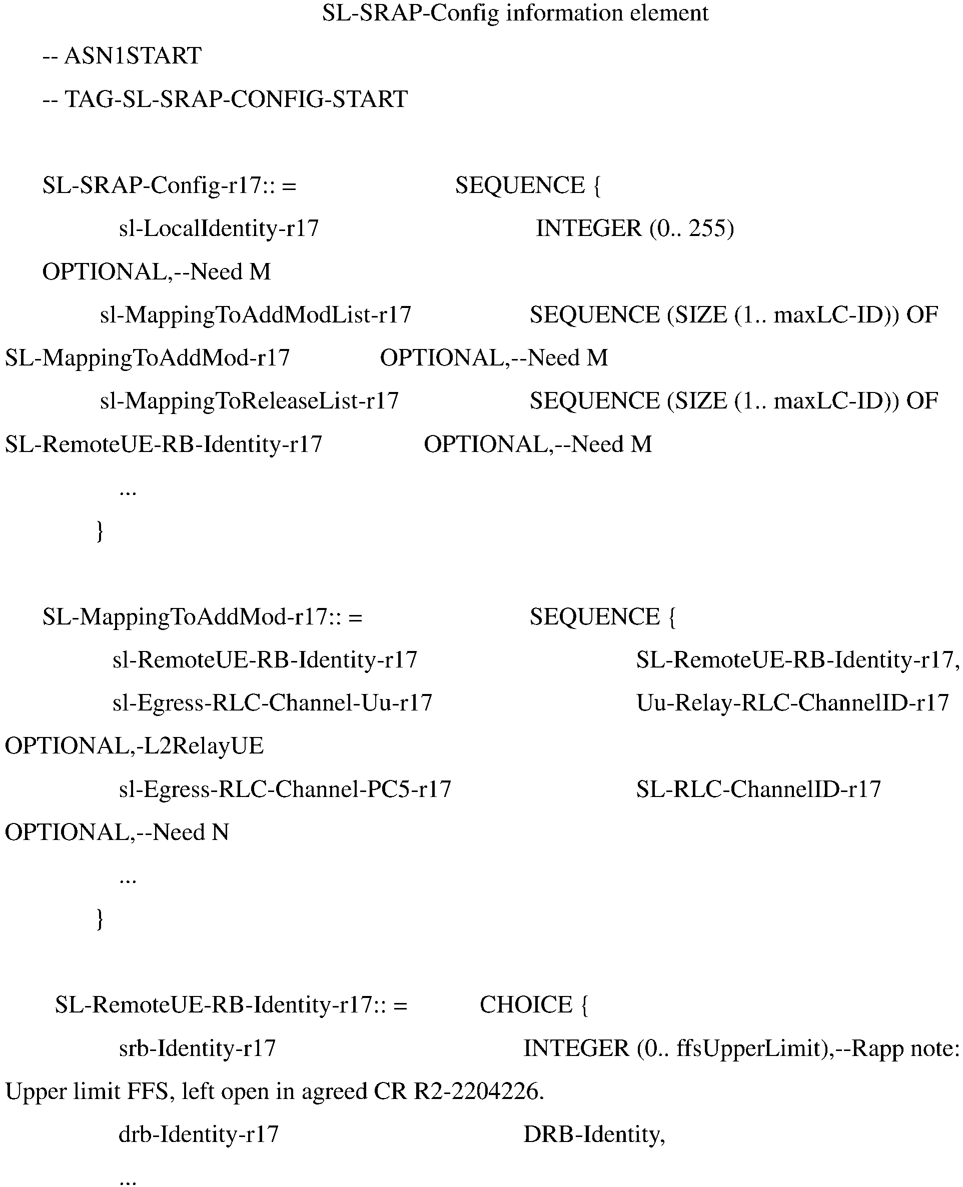

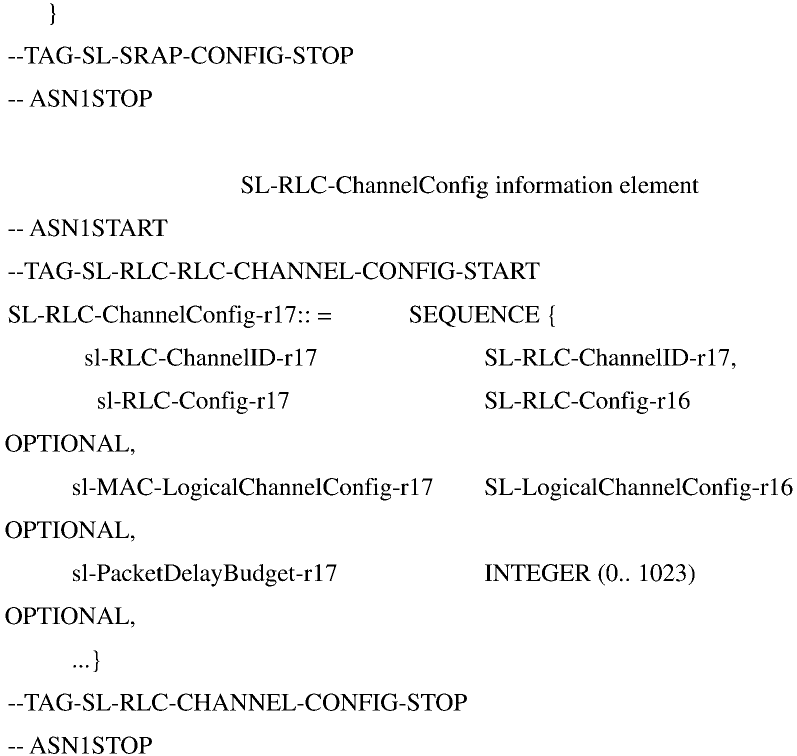

In the U2N relay scenario, the remote UE sometimes wishes to obtain messages (such as the system message and/or the paging message) sent by network device. However, there is currently no suitable solution on how the remote UE acquires the message sent by the network device.

In view of the above problem, in the embodiment of the present disclosure, referring to operation S310 in FIG. 3, a remote UE sends a request message to a first relay UE, to request the first relay UE for a first message sent by a network device. The request message is beneficial for the remote UE to obtain the message sent by the network device.

In some embodiments, the first message may include one or more of a first system message and a first paging message.

In some embodiments, if the first message includes the first system message, the request message may include indication information for indicating a type of the system message. For example, the indication information may indicate that the first system message is a system information block 1 (SIB1) or SIB2.

In some embodiments, if the first message includes the first paging message, the request message may include indication information for indicating one or more of the following: an identity of the UE associated with the first paging message; and the length of a paging period of the first paging message.

In some embodiments, the method shown in FIG. 3 may further include an operation S320 in which the remote UE receives a first message sent by the first relay UE. For example, the first relay UE may acquire the first message from the network device and then forward the first message to the remote UE.

In some embodiments, the remote UE may be connected to the network device through one relay UE.

In some embodiments, the remote UE may be connected to the network device through multi-hop relay UEs. Such connection scenario is referred to as a multi-hop relay scenario hereinafter.

In some embodiments, the remote UE may establish multiple connections with the network device(s) (which may be one network device or multiple network devices) through multiple relay UEs. Such connection scenario is referred to as a multi-path relay scenario hereinafter.

In some embodiments, the network device may receive the request message sent by the remote UE through one or more relay UEs. The one or more relay UEs may include other relay UEs in addition to the first relay UE mentioned above.

Hereinafter, in conjunction with the first embodiment and the second embodiment, how the remote UE acquires the first message in the multi-hop relay scenario and the multi-path relay scenario will be described in detail.

### Embodiment 1: multi-hop relay scenario.

In embodiment 1.1, the first relay UE is a relay UE adjacent to the remote UE among the multi-hop relay UEs.

The first relay UE may refer to a direct relay UE of the remote UE. In other words, the first relay UE may refer to a UE that establishes a direct connection or a PC5 connection with the remote UE.

In some embodiments, after receiving the request message sent by the remote UE, the first relay UE may continue to forward the request message to a second relay UE.

In some embodiments, the request message sent by the first relay UE may include an identity of the remote UE and/or the first relay UE.

In some embodiments, the second relay UE may be a relay UE adjacent to the first relay UE among the multi-hop relay UEs. That is, the multi-hop relay UEs may forward the request message to the network device hop by hop. Further, in some embodiments, in the process of forwarding the request message, the relay UE at each hop may further carry the identity of the relay UE at the respective hop into the request message sent by the relay UE at a previous hop.

In some embodiments, the second relay UE may be a relay UE of the multi-hop relay UEs that is directly connected to the network device through an air interface. If the multi-hop relay UEs also includes other relay UE located between the first relay UE and the second relay UE, the first relay UE may transmit the request message to the second relay UE based on an end-to-end connection between the first relay UE and the second relay UE. Transmitting the request message based on the end-to-end connection can reduce the number of hops for forwarding the request message, which is beneficial to quickly forward the request message to the network device.

The multi-hop relay UEs further includes a third relay UE directly connected to the network device (the third relay UE and the second relay UE may or may not be the same relay UE), and the third relay UE is a relay UE directly connected to the network device through an air interface among the multi-hop relay UEs. The third relay UE may send the request message to the network device (e.g., through an air interface). For example, the third relay UE may send the request message to the network device through message 1 (msg1), message 3 (msg3), or RRC signaling, such as dedicated RRC signaling.

In some embodiments, after receiving the request message, the network device may send the first message to the third relay UE. Further, in some embodiments, when sending the first message, the network device may further carry one or more of the following pieces of information: an identity of the remote UE, an identity of the first relay UE, and an identity of the relay UE between the first relay UE and the third relay UE.

Further, after the third relay UE receives the first message sent by the network device, the third relay UE may send the first message to the first relay UE. If there are other relay UEs between the third relay UE and the first relay UE, the third relay UE may forward the first message hop by hop, or send the first message through an end-to-end connection between the third relay UE and the first relay UE.

If the third relay UE forwards the first message hop by hop, one or more of the following pieces of information may be carried in the process of forwarding the first message: an identity of the remote UE, an identity of the first relay UE, and an identity of the relay UE between the first relay UE and the third relay UE.

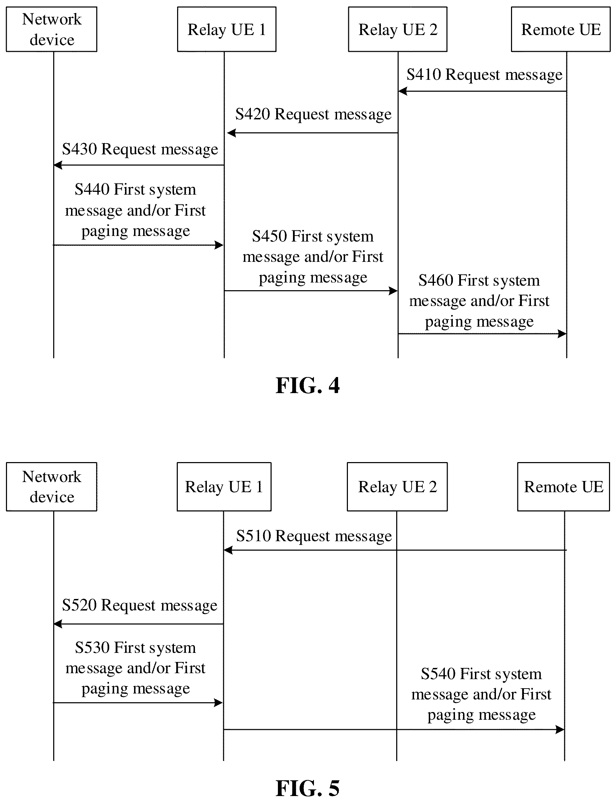

A more specific example of the embodiment 1.1 is given below with reference to FIG. 4. In the following example, the first relay UE mentioned above is a relay UE 2, and the relay UE 2 is directly connected to a remote UE. The second relay UE and the third relay UE mentioned above are both relay UE 1, and the relay UE 1 is directly connected to the network device through an air interface.

Referring to FIG. 4, at operation S410, the remote UE sends a request message to the relay UE 2. The request message is used to request a first system message and/or a first paging message. In some implementations, the request message may include one or more of the following pieces of information: a type of the first system message; an identity of a UE paged by the first paging message; and the length of a paging period of the first paging message.

At step S420, the relay UE 2 sends the request message to the relay UE 1. Optionally, the request message may further include one or more of the following pieces of information: an identity of the remote UE; and an identity of the relay UE 2.

If there are other relay UEs (not shown in FIG. 4) between the relay UE 2 and the relay UE 1, the relay UE 2 may select one of the following methods for processing:

In method 1, the relay UE 2 sends a request message hop by hop, and the request message sent by the relay UE at each hop may further include an identity of the relay UE in the respective hop.

In method 2, the relay UE 2 sends the request message through an end-to-end connection between the relay UE 2 and the relay UE 1 (a relay of a direct network).

At step S430, the relay UE 1 sends the request message to the network device. For example, the relay UE 1 may send the request message to the network device through message 1, message 3, or dedicated RRC signaling.

At step S440, the network device sends a first system message and/or a first paging message to the relay UE 1. Optionally, when sending the first system message and/or the first paging message, the network device may further carry one or more of the following pieces of information: an identity of a remote UE; an identity of the relay UE 1; and an identity of the relay UE 2.

At step S450, the relay UE 1 sends the first system message and/or the first paging message to the relay UE 2. If there are other relay UEs between the relay UE 2 and the relay UE 1, the relay UE 1 may select one of the following methods for processing:
In method 1, the relay UE 1 sends the request message hop by hop, and the request message sent at each hop includes one or more of the following pieces of information: an identity of the remote UE; an identity of the relay UE 1; and an identity of the relay UE 2.

In method 2, the relay UE 1 sends the request message through an end-to-end connection between the relay UE 1 and the relay UE 2.

At step S460, the relay UE 2 forwards the message to the remote UE.

In embodiment 1.2, the first relay UE is a relay UE connected to the network device through an air interface among the multi-hop relay UEs.

In the embodiment 1.2, the first relay UE may be a relay UE directly connected to the network device. The remote UE directly requests the first message from the relay UE that is directly connected to the network device, thereby reducing the number of forwarding hops of the first message in the multi-hop relay UEs, which is beneficial for the remote UE to quickly obtain the first message.

In some embodiments, the request message may be transmitted based on an end-to-end connection between the remote UE and the first relay UE. Transmitting the request message based on the end-to-end connection can reduce the number of hops for forwarding the request message, which is beneficial to quickly forward the request message to the network device.

In some embodiments, the first relay UE may send the request message to the network device (e.g., through an air interface). For example, the first relay UE may send the request message to the network device through message 1, message 3, or RRC signaling (such as dedicated RRC signaling).

In some embodiments, the network device may send the first message to the first relay UE.

Further, after the first relay UE receives the first message sent by the network device, the first relay UE may send the first message to the remote UE. For example, the first relay UE may send the first message to the remote UE through the end-to-end connection with the remote UE.

A more specific example of the embodiment 1.2 is given below with reference to FIG. 5. In the following example, the first relay UE mentioned above is relay UE 1, the end-to-end connection is established between the remote UE and the relay UE 1, and the relay UE 1 is directly connected to the network device through the air interface.

Referring to FIG. 5, at operation S510, the remote UE sends a request message to the relay UE 1. The request message may be used to request a first system message and/or a first paging message. In some implementations, the request message may include one or more of the following pieces of information: a type of the first system message; an identity of a UE paged by the first paging message; and a length of a paging period of the first paging message.

At operation S520, the relay UE 1 sends the request message to the network device. For example, the relay UE 1 may send the request message to the network device through message 1, message 3, or dedicated RRC signaling.

At step S530, the network device sends a first system message and/or a first paging message to the relay UE 1.

At step S540, the relay UE 1 sends the first system message and/or the first paging message to the remote UE through the end-to-end connection between the relay UE 1 and the remote UE.

### Embodiment 2: multi-path relay scenario

In some embodiments, the first relay UE (or a connection or a relay path on which the first relay UE is located) may be determined based on first indication information sent by an upper layer of an access stratum of the remote UE.

In some embodiments, the upper layer of the access stratum may be, for example, a non-access stratum (NAS) layer, a V2X layer, a Prose layer, or an application layer.

In some embodiments, the first indication information may include indication information for a service. For example, the first indication information may include indication information for a service type.

As a possible implementation, the first indication information may indicate whether to transmit the request message based on the relay UE corresponding to an emergency service. For example, the multiple relay UEs include a relay UE supporting an emergency service and a relay UE supporting a non-emergency service, and if the first indication information indicates that the request message is transmitted based on the relay UE corresponding to the emergency service, the remote UE may select a relay UE supporting the emergency service from the multiple relay UEs as the first relay UE.

As another possible implementation, the first indication information may indicate a priority of the service (or a priority of the service corresponding to the relay UE). For example, relay 1 among multiple relay UEs corresponds to service 1, and relay 2 among multiple relay UEs corresponds to service 2. If the priority of service 1 is higher than the priority of service 2, relay 1 may be used as the first relay UE. If the priority of service 2 is higher than the priority of service 1, relay 2 may be used as the first relay UE.

In some embodiments, the first indication information may include indication information for a network slicing. For example, the first indication information may include indication information for a network slicing type.

As a possible implementation, the first indication information may indicate a network slicing (or a network slicing corresponding to the relay UE). For example, relay 1 among the multiple relay UEs corresponds to network slicing 1, and relay 2 among the multiple relay UEs corresponds to network slicing 2. If the first indication information indicates network slicing 1, the remote UE may determine relay 1 as the first relay UE. If the first indication information indicates network slicing 2, the remote UE may determine relay 2 as the first relay UE.

As another possible implementation, the first indication information may indicate a priority of the network slicing (or a priority of the network slicing corresponding to the relay UE). For example, relay 1 among the multiple relay UEs corresponds to network slicing 1, and relay 2 among the multiple relay UEs corresponds to network slicing 2. If the priority of network slicing 1 is higher than the priority of network slicing 2, relay 1 may be used as the first relay UE. If the priority of network slicing 2 is higher than the priority of network slicing 1, relay 2 may be used as the first relay UE.

In some embodiments, the first relay UE may be determined based on access stratum information of the remote UE. The access stratum information may, for example, be associated with one or more of the following pieces of information: quality of links between the remote UE and the multiple relay UEs; and quality of links between the multiple relay UEs and the network device.

For example, the access stratum information may indicate quality of links between the remote UE and the multiple relay UEs. The remote UE may select the first relay UE from the multiple relay UEs based on the quality of links between the remote UE and the multiple relay UEs. Exemplarily, the remote UE may select, from the multiple relay UEs, a relay UE having the best link quality with the remote UE as the first relay UE.

As another example, the access stratum information may indicate the quality of links between the multiple relay UEs and the network device. The remote UE may select the first relay UE from the multiple relay UEs based on the quality of links between the multiple relay UEs and the network device. Exemplarily, the remote UE may select, from the multiple relay UEs, a relay UE having the best link quality with the network device as the first relay UE.

As another example, the access stratum information may include, for example, configuration information of the access stratum. The configuration information of the access stratum may be a quality threshold of the link between the remote UE and the relay UE. The remote UE may compare the quality of links between the remote UE and the multiple relay UEs with the threshold, for selecting a first relay UE from the multiple relay UEs.

As another example, the access stratum information may include, for example, configuration information of the access stratum. The configuration information of the access stratum may be a quality threshold of the link between the relay UE and the network device. The remote UE may compare the quality of links between the multiple relay UEs and the network device with the threshold, for selecting a first relay UE from the multiple relay UEs.

In some embodiments, the first relay UE may be determined based on protocol predefined information. For example, the protocol predefined information may be used to indicate that the request message is transmitted based on the relay UE corresponding to the emergency service. As another example, the protocol predefined information indicates that that the request message is transmitted based on the relay UE corresponding to the non-emergency service.

In some embodiments, the first relay UE may be determined based on a sequence in which the multiple relay UEs are connected to the remote UE. For example, the remote UE may take a relay UE, which first establishes a connection (such as a PC5 connection or a direct connection) with the remote UE among the multiple relay UEs, as the first relay UE. As another example, the remote UE may take a relay UE, which last establishes a connection (such as a PC5 connection or a direct connection) with the remote UE among the multiple relay UEs, as the first relay UE.

In some implementations, the first relay UE may be determined based on cell groups associated with the multiple relay UEs. For example, the remote UE may use a relay UE associated with a master cell group (MCG) as the first relay UE.

In some implementations, the first relay UE may be determined based on cells associated with the multiple relay UEs. For example, the remote UE may take a relay UE associated with a primary cell (pcell) as the first relay UE.

In some embodiments, the first relay UE may be determined based on an implementation of the remote UE. That is, the remote UE may autonomously select the first relay UE from the multiple relay UEs.

In some embodiments, if the first relay UE and a target relay UE (the target relay is a relay UE where the remote UE camps on before sending the request message) are in different tracking areas (TAs), the remote UE may perform mobility registration update before the remote UE sends the request message to the first relay UE. In other words, the remote UE performs the registration update process.

In some embodiments, the first relay UE may send the request message to the network device (e.g., through an air interface). For example, the first relay UE may send the request message to the network device through message 1, message 3, or RRC signaling (such as dedicated RRC signaling).

In some embodiments, the network device may send the first message to the first relay UE. Further, in some embodiments, after the first relay UE receives the first message sent by the network device, the first relay UE may send the first message to the remote UE.

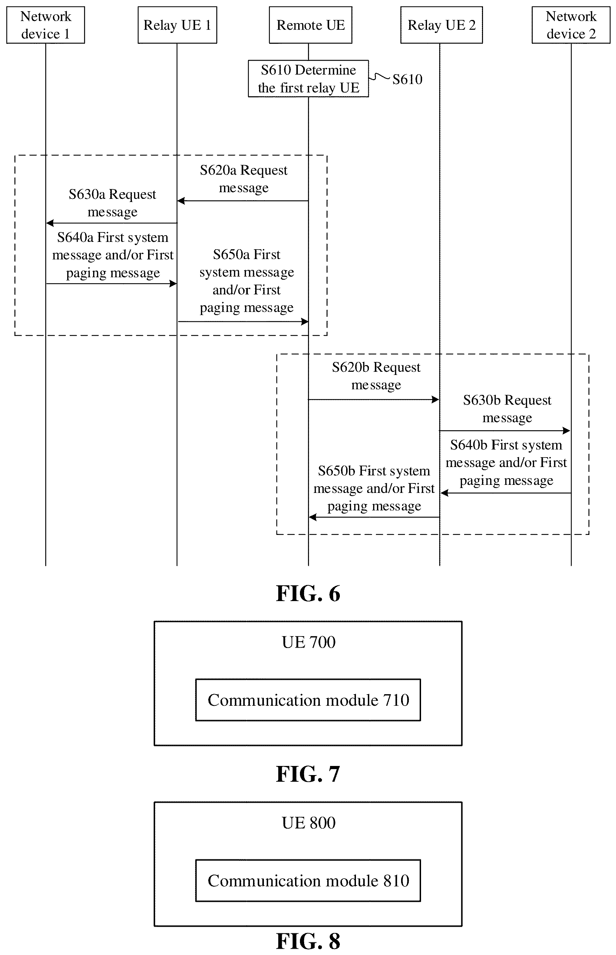

FIG. 6 shows a more specific example of the embodiment 2. In the example of FIG. 6, the remote UE is connected to the network device 1 through the relay UE 1 and is connected to the network device 2 through the relay UE 2. The relay UE 1 is a relay UE supporting the emergency service, and the relay UE 2 is a relay UE supporting the non-emergency service.

At operation S610, the remote UE determines to send a request message to the relay UE 1 based on the first indication information sent by an upper layer (for example, the NAS layer) of the access stratum. If the first indication information indicates that the remote UE requests the first system message and/or the first paging message through the relay UE supporting the emergency service, operation S620a is performed. If the first indication information indicates that the remote UE requests the first system message and/or the first paging message through the relay UE supporting the non-emergency service, operation S620b is performed.

At operation S620a, the remote UE sends the request message to the relay UE 1 (which in this case corresponds to the first relay UE mentioned above).

At operation S630a, the relay UE 1 sends the request message to the network device 1. For example, the relay UE 1 may send the request message to the network device 1 through message 1, message 3, or dedicated RRC signaling.

At operation S640a, the network device 1 sends a first system message and/or a first paging message to the relay UE 1.

At operation S650a, the relay UE 1 sends the first system message and/or the first paging message to the remote UE.

At operation S620b, the remote UE sends a request message to the relay UE 2 (which in this case corresponds to the first relay UE mentioned above).

At operation S630b, the relay UE 2 sends the request message to the network device 2. For example, the relay UE 1 may send the request message to the network device 2 through message 1, message 3, or dedicated RRC signaling.

At operation S640a, the network device 2 sends a first system message and/or a first paging message to the relay UE 2.

At step S650a, the relay UE 2 sends the first system message and/or the first paging message to the remote UE.

The method embodiments of the present disclosure are described in detail above with reference to FIG. 1 to FIG. 6, and the device embodiments of the present disclosure are described in detail below with reference to FIG. 7 to FIG. 10. It should be understood that the description of the method embodiment and the description of the device embodiment correspond to each other. Therefore, regarding the portions not described in detail, reference may be made to the foregoing method embodiments.

FIG. 7 is an example structural diagram of a UE according to an embodiment of the present disclosure. The UE 700 illustrated in FIG. 7 may be the remote UE mentioned above. The UE 700 may include a communication module 710. The communication module 710 may be configured to send a request message to a first relay UE, and the request message is used to request, from the first relay UE, a first message sent by a network device.

In some embodiments, there are multi-hop relay UEs between the remote UE and the network device, and the first relay UE is one of the multi-hop relay UEs.

In some embodiments, the first relay UE is a relay UE adjacent to the remote UE among the multi-hop relay UEs.

In some embodiments, the first relay UE is a relay UE connected to the network device through an air interface among the multi-hop relay UEs.

In some embodiments, the request message is transmitted based on an end-to-end connection between the remote UE and the first relay UE.

In some embodiments, the remote UE establishes multiple connections with the network device through multiple relay UEs, and the first relay UE is one of the multiple relay UEs.

In some embodiments, the first relay UE is determined based on one of the following: first indication information sent by an upper layer of an access stratum of the remote UE; access stratum information of the remote UE; protocol predefined information; a sequence in which the multiple relay UEs are connected to the remote UE; cell groups or cells associated with the multiple relay UEs; and an implementation of the remote UE.

In some embodiments, the first indication information includes indication information for a service and/or indication information for a network slicing.

In some embodiments, the first indication information indicates one or more of the following pieces of information: whether to transmit the request message based on a relay UE corresponding to an emergency service; a service priority corresponding to the relay UE; a type of network slicing corresponding to the relay UE; and a priority of the network slicing corresponding to the relay UE.

In some embodiments, the access stratum information indicates one or more of the following: quality of links between the remote UE and the multiple relay UEs; and quality of links between the multiple relay UEs and the network device.

In some embodiments, the protocol predefined information indicates that the request message is transmitted the relay UE corresponding to an emergency service.

In some embodiments, if the first relay UE and a target relay UE are in different tracking areas, before the remote UE sends the request message to the first relay UE, the remote UE further includes an update module which is configured to perform a mobility registration update. The target relay UE is a relay UE where the remote UE camps on before sending the request message.

In some embodiments, the first message includes one or more of a first system message and a first paging message.

In some embodiments, the first message includes the first system message, and the request message includes second indication information for indicating a type of the first system message.

In some embodiments, the first message includes the first paging message, and the request message includes third indication information for indicating one or more of the following: an identity of a UE associated with the first paging message; and the length of a paging period of the first paging message.

In some embodiments, the communication module 710 is further configured to receive the first message sent by the first relay UE.

FIG. 8 is an example structural diagram of a UE according to another embodiment of the present disclosure. The UE 800 illustrated in FIG. 8 may be the first relay UE mentioned above. The UE 800 may include a communication module 810. The communication module 810 may be configured to receive a request message sent by a remote UE. The request message is used to request, from the first relay UE, a first message sent by a network device.

In some embodiments, there are multi-hop relay UEs between the remote UE and the network device, and the first relay UE is one of the multi-hop relay UEs.

In some embodiments, the first relay UE is a relay UE adjacent to the remote UE among the multi-hop relay UEs.

In some embodiments, the communication module is further configured to send the request message to a second relay UE.

In some embodiments, the request message sent by the first relay UE includes an identity of the remote UE and/or the first relay UE.

In some embodiments, the second relay UE is a relay UE adjacent to the first relay UE among the multi-hop relay UEs.

In some embodiments, the second relay UE is a relay UE connected to the network device through an air interface among the multi-hop relay UEs.

In some embodiments, the multi-hop relay UEs includes a relay UE located between the first relay UE and the second relay UE. The first relay UE transmits the request message to the second relay UE based on an end-to-end connection between the first relay UE and the second relay UE.

In some embodiments, the first relay UE is a relay UE connected to the network device through an air interface among the multi-hop relay UEs.

In some embodiments, the request message is transmitted based on an end-to-end connection between the remote UE and the first relay UE.

In some embodiments, the remote UE establishes multiple connections with the network device through multiple relay UEs, and the first relay UE is one of the multiple relay UEs.

In some embodiments, the first relay UE is determined based on one of the following: first indication information sent by an upper layer of an access stratum of the remote UE; access stratum information of the remote UE; protocol predefined information; a sequence in which the multiple relay UEs are connected to the remote UE; cell groups or cells associated with the multiple relay UEs; and an implementation of the remote UE.

In some embodiments, the first indication information includes indication information for a service and/or indication information for a network slicing.

In some embodiments, the first indication information indicates one or more of the following pieces of information: whether to transmit the request message based on a relay UE corresponding to an emergency service; a service priority corresponding to the relay UE; a type of network slicing corresponding to the relay UE; and a priority of the network slicing corresponding to the relay UE.

In some embodiments, the access stratum information indicates one or more of the following: quality of links between the remote UE and the multiple relay UEs; and quality of links between the multiple relay UEs and the network device.

In some embodiments, the protocol predefined information indicates that the request message is transmitted based on the relay UE corresponding to an emergency service.

In some embodiments, the first message includes one or more of the following: a first system message and a first paging message.

In some embodiments, the first message includes the first system message, and the request message includes second indication information for indicating a type of the first system message.

In some embodiments, the first message includes the first paging message, and the request message includes third indication information for indicating one or more of the following: an identity of a UE associated with the first paging message; and the length of a paging period of the first paging message.

In some embodiments, the communication module is further configured to send the first message to the remote UE.

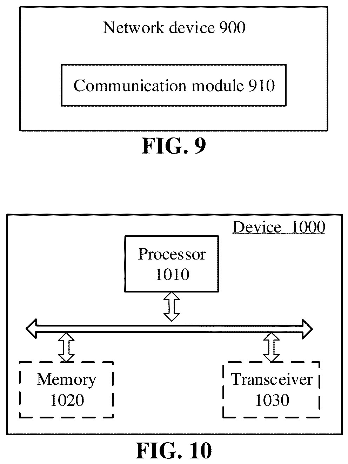

FIG. 9 is an example structural diagram of a network device according to an embodiment of the present disclosure. The network device 900 shown in FIG. 9 may include a communication module 910. The communication module 910 may be configured to receive a request message sent by a remote UE through one or more relay UEs. The request message is used to request, from a first relay UE of the one or more relay UEs, a first message sent by the network device.

In some embodiments, there are multi-hop relay UEs between the remote UE and the network device, and the first relay UE is one of the multi-hop relay UEs.

In some embodiments, the first relay UE is a relay UE adjacent to the remote UE among the multi-hop relay UEs.

In some embodiments, the first relay UE is a relay UE connected to the network device through an air interface among the multi-hop relay UEs.

In some embodiments, the request message is transmitted based on an end-to-end connection between the remote UE and the first relay UE.

In some embodiments, the request message received by the network device further includes identities of the one or more relay UEs and the remote UE.

In some embodiments, the remote UE establishes multiple connections with the network device through multiple relay UEs, and the first relay UE is one of the multiple relay UEs.

In some embodiments, the first relay UE is determined based on one of the following: first indication information sent by an upper layer of an access stratum of the remote UE; access stratum information of the remote UE; protocol predefined information; a sequence in which the multiple relay UEs are connected to the remote UE; cell groups or cells associated with the multiple relay UEs; and an implementation of the remote UE.

In some embodiments, the first indication information includes indication information for a service and/or indication information for a network slicing.

In some embodiments, the first indication information indicates one or more of the following pieces of information: whether to transmit the request message based on a relay UE corresponding to an emergency service; a service priority corresponding to the relay UE; a type of network slicing corresponding to the relay UE; and a priority of the network slicing corresponding to the relay UE.

In some embodiments, the access stratum information indicates one or more of the following: quality of links between the remote UE and the multiple relay UEs; and quality of links between the multiple relay UEs and the network device.

In some embodiments, the protocol predefined information indicates that the request message is transmitted based on the relay UE corresponding to an emergency service.

In some embodiments, the first message includes one or more of the following: a first system message and a first paging message.

In some embodiments, the first message includes the first system message, and the request message includes second indication information for indicating a type of the first system message.

In some embodiments, the first message includes the first paging message, and the request message includes third indication information for indicating one or more of the following: an identity of a UE associated with the first paging message; and the length of a paging period of the first paging message.

In some embodiments, the communication module is further configured to send the first message to the remote UE through the one or more relay UEs, and the first message includes an identity of the one or more relay UEs.

FIG. 10 is a schematic structural diagram of a communication device according to an embodiment of the present disclosure. The dashed line in FIG. 10 indicates that the unit or module is optional. The device 1000 may be used to implement the method described in the method embodiments described above. The device 1000 may be a chip, a UE, or a network device.

The device 1000 may include one or more processors 1010. The processor 1010 may cause the device 1000 to implement the methods described in the method embodiments described above. The processor 1010 may be a general-purpose processor or a dedicated-purpose processor. For example, the processor may be a central processing unit (CPU). Alternatively, the processor may also be other general-purpose processor, a digital signal processor (DSP), an application specific integrated circuit (ASIC), a field programmable gate array (FPGA) or other programmable logic device, a discrete gate or a transistor logic device, a discrete hardware component, or the like. The general-purpose processor may be a microprocessor or the processor may be any conventional processor or the like.

The device 1000 may also include one or more memories 1020. The memory 1020 has stored a program that may be executed by the processor 1010 to cause the processor 1010 to perform the method described in the method embodiments described above. The memory 1020 may be independent of the processor 1010 or may be integrated into the processor 1010.

The device 1000 may also include a transceiver 1030. The processor 1010 may communicate with other devices or chips through the transceiver 1030. For example, the processor 1010 may receive or send data from/to other devices or chips through the transceiver 1030.

The embodiment of the present disclosure also provides a computer-readable storage medium for storing a program. The computer-readable storage medium may be applied to a UE or a network device provided by an embodiment of the present disclosure, and the program causes a computer to perform a method executed by the UE or the network device in each embodiment of the present disclosure.

The embodiments of the present disclosure also provide a computer program product. The computer program product includes a program. The computer program product may be applied to a UE or a network device provided by an embodiment of the present disclosure, and the program causes a computer to perform a method executed by the UE or the network device in each embodiment of the present disclosure.

The embodiments of the present disclosure also provide a computer program. The computer program may be applied to a UE or a network device provided by an embodiment of the present disclosure, and the computer program causes a computer to perform a method executed by the UE or the network device in each embodiment of the present disclosure.

It is to be understood that the terms "system" and "network" may be used interchangeably in this disclosure. In addition, the terms used in the present disclosure is for explanation of specific embodiments of the present disclosure only, and is not intended to limit the present disclosure. The terms "first", "second", "third", and "fourth", etc. in the specification, claims and the accompanying drawings of the present disclosure are used to distinguish different objects, and are not used to describe a specific order. Furthermore, the terms "comprising" and "having" and any variations thereof are intended to cover non-exclusive inclusions.

In the embodiments of the present disclosure, the "indication" mentioned may be a direct indication, an indirect indication, or an associated relationship. For example, A indicates B, which may mean that A directly indicates B, for example, B can be acquired by A; which may also mean that A indicates B indirectly, for example, A indicates C, and B can be obtained through C; which may also mean that there is an association relationship between A and B.

In an embodiment of the present disclosure, "B corresponding to A" means that B is associated with A, and B can be determined from A. However, it should also be understood that B is determined from A does not mean that B is determined from A alone, and that B may also be determined from A and/or other information.

In the embodiments of the present disclosure, the term "correspondence" may indicate that there is a direct correspondence or indirect correspondence relationship between the two objects, may indicate that there is a correlation relationship between the two objects, or may indicate a relationship between indicating and being instructed, configuring and being configured, or the like.

In an embodiment of the present disclosure, the term "predefined" or "preconfigured" may be implemented by pre-storing a corresponding code, a table, or other manners for indicating relevant information in a device (including, for example, a UE and a network device) in advance, and the specific implementation method is not limited in the present disclosure. For example, the term "predefined" may refer to being defined in the protocol.

In the embodiment of the present disclosure, the "protocol" may refer to a standard protocol in the communication field, and may include, for example, an LTE protocol, an NR protocol, and related protocols applied to future communication systems, which is not limited in the present disclosure.

The term "and/or" in the embodiment of the present disclosure is only an association relationship describing an association object, and indicates that there may be three relationships. For example, A and/or B may mean that A alone exists, A and B simultaneously exist, and B alone exists. In addition, the character "/" herein generally indicates that the associated objects before and after are in an "or" relationship.

In various embodiments of the present disclosure, the sequence numbers of the operations described above does not mean the order of execution, and the order of execution of each process should be determined by its function and internal logic, and should not constitute any limitation on the implementation process of the embodiments of the present disclosure.

In several embodiments provided in the present disclosure, it should be understood that the disclosed systems, devices, and methods may be implemented in other ways. For example, the device embodiments described above are merely schematic, for example, the division of units is only one logical function division, and there may be other division methods in actual implementation, for example, multiple units or components may be combined or integrated into another system, or some features may be ignored or not implemented. In addition, the coupling or direct coupling or communication connection shown or discussed may be an indirect coupling or communication connection through some interface, device or unit, and may be electrical, mechanical or in other manners.

The units described as separate components may or may not be physically separate, and the components displayed as units may or may not be physical units, that is, they may be located in one place or may be distributed over multiple network units. Some or all of the units may be selected according to actual needs to achieve the purpose of the solution of the present embodiment.

In addition, the functional units in each embodiment of the present disclosure may be integrated in one processing unit, each unit may exist physically independently, or two or more units may be integrated in one unit.

The embodiments described above may be implemented in whole or in part by the software, the hardware, the firmware, or any combination thereof. When implemented using the software, the embodiments may be implemented in whole or in part in the form of a computer program product. The computer program product includes one or more computer instructions. When the computer program instructions are loaded and executed on a computer, the processes or functions described in accordance with embodiments of the present disclosure are generated in whole or in part. The computer may be a general-purpose computer, a special-purpose computer, a computer network, or other programmable device. The computer instructions may be stored in a computer-readable storage medium or transmitted from one computer-readable storage medium to another computer-readable storage medium, for example, the computer instructions may be transmitted from a website site, a computer, a server or a data center by wired (e.g. a coaxial cable, an optical fiber, a digital subscriber line (DSL)) or a wireless (e.g. infrared, wireless, microwave, etc.) manner to another website site, computer, server or data center. The computer-readable storage medium may be any available medium that may be read by a computer or a data storage device such as a server, a data center, or the like that includes one or more available media integrations. The available media may be a magnetic media (e.g., a floppy disk, a hard disk, a magnetic tape), an optical media (e.g., a digital video disc (DVD)), or a semiconductor media (e.g., a solid-state disk (SSD)), etc.

The foregoing is merely a specific embodiment of the present disclosure, but the scope of protection of the present disclosure is not limited thereto, and changes or substitutions easily conceived by any person skilled in the art within the technical scope disclosed in the present disclosure should be covered within the scope of protection of the present disclosure. Therefore, the scope of protection of the present disclosure should be based on the scope of protection of the claims.

## Claims

1. A wireless communication method, comprising:
sending, by a remote user equipment (UE), a request message to a first relay UE, wherein the request message is used to request, from the first relay UE, a first message sent by a network device.

2. The method of claim 1, wherein there are multi-hop relay UEs between the remote UE and the network device, and the first relay UE is one of the multi-hop relay UEs.

3. The method of claim 2, wherein the first relay UE is a relay UE adjacent to the remote UE among the multi-hop relay UEs.

4. The method of claim 2, wherein the first relay UE is a relay UE connected to the network device through an air interface among the multi-hop relay UEs.

5. The method of claim 4, wherein the request message is transmitted based on an end-to-end connection between the remote UE and the first relay UE.

6. The method of claim 1, wherein the remote UE establishes a plurality of connections with the network device through a plurality of relay UEs, and the first relay UE is one of the plurality of relay UEs.

7. The method of claim 6, wherein the first relay UE is determined based on one of:
first indication information sent by an upper layer of an access stratum of the remote UE;
access stratum information of the remote UE;
protocol predefined information;
a sequence in which the plurality of relay UEs are connected to the remote UE;
cell groups or cells associated with the plurality of relay UEs; and
an implementation of the remote UE.

8. The method of claim 7, wherein the first indication information comprises indication information for a service and/or indication information for a network slicing.

9. The method of claim 8, wherein the first indication information indicates one or more of:
whether to transmit the request message based on a relay UE corresponding to an emergency service;
a service priority corresponding to the relay UE;
a type of a network slicing corresponding to the relay UE; and
a priority of the network slicing corresponding to the relay UE.

10. The method of any one of claims 7 to 9, wherein the access stratum information indicates one or more of:
quality of links between the remote UE and the plurality of relay UEs; and
quality of links between the plurality of relay UEs and the network device.

11. The method of any one of claims 7 to 10, wherein the protocol predefined information indicates that the request message is transmitted based on the relay UE corresponding to the emergency service.

12. The method of any one of claims 7 to 11, wherein if the first relay UE and a target relay UE are located in different tracking areas, the method further comprises: before the remote UE sends the request message to the first relay UE,
performing, by the remote UE, a mobility registration update;
wherein the target relay UE is a relay UE where the remote UE camps on before sending the request message.

13. The method of any one of claims 1 to 12, wherein the first message comprises one or more of:
a first system message; and
a first paging message.

14. The method of claim 13, wherein the first message comprises the first system message, and the request message comprises second indication information for indicating a type of the first system message.

15. The method of claim 13 or 14, wherein the first message comprises the first paging message, and the request message comprises third indication information for indicating one or more of:
an identity of a UE associated with the first paging message; and
a length of a paging period of the first paging message.

16. The method of any one of claims 1 to 15, further comprising:
receiving, by the remote UE, the first message sent by the first relay UE.

17. A wireless communication method, comprising:
receiving, by a first relay user equipment (UE), a request message sent by a remote UE, wherein the request message is used to request, from the first relay UE, a first message sent by a network device.

18. The method of claim 17, wherein there are multi-hop relay UEs between the remote UE and the network device, and the first relay UE is one of the multi-hop relay UEs.

19. The method of claim 18, wherein the first relay UE is a relay UE adjacent to the remote UE among the multi-hop relay UEs.

20. The method of claim 19, further comprising:
sending, by the first relay UE, the request message to a second relay UE.

21. The method of claim 20, wherein the request message sent by the first relay UE comprises an identity of the remote UE and/or the first relay UE.

22. The method of claim 20 or 21, wherein the second relay UE is a relay UE adjacent to the first relay UE among the multi-hop relay UEs.

23. The method of claim 20 or 21, wherein the second relay UE is a relay UE connected to the network device through an air interface among the multi-hop relay UEs.

24. The method of claim 23, wherein the multi-hop relay UEs comprise a relay UE located between the first relay UE and the second relay UE, and the first relay UE transmits the request message to the second relay UE based on an end-to-end connection between the first relay UE and the second relay UE.

25. The method of claim 18, wherein the first relay UE is a relay UE connected to the network device through an air interface among the multi-hop relay UEs.

26. The method of claim 25, wherein the request message is transmitted based on an end-to-end connection between the remote UE and the first relay UE.

27. The method of claim 17, wherein the remote UE establishes a plurality of connections with the network device through a plurality of relay UEs, and the first relay UE is one of the plurality of relay UEs.

28. The method of claim 27, wherein the first relay UE is determined based on one of:
first indication information sent by an upper layer of an access stratum of the remote UE;
access stratum information of the remote UE;
protocol predefined information;
a sequence in which the plurality of relay UEs are connected to the remote UE;
cell groups or cells associated with the plurality of relay UEs; and
an implementation of the remote UE.

29. The method of claim 28, wherein the first indication information comprises indication information for a service and/or indication information for a network slicing.

30. The method of claim 29, wherein the first indication information indicates one or more of:
whether to transmit the request message based on a relay UE corresponding to an emergency service;
a service priority corresponding to the relay UE;
a type of a network slicing corresponding to the relay UE; and
a priority of the network slicing corresponding to the relay UE.

31. The method of any one of claims 28 to 30, wherein the access stratum information indicates one or more of:
quality of links between the remote UE and the plurality of relay UEs; and
quality of links between the plurality of relay UEs and the network device.

32. The method of any one of claims 28 to 31, wherein the protocol predefined information indicates that the request message is transmitted based on the relay UE corresponding to the emergency service.

33. The method of any one of claims 17 to 32, wherein the first message comprises one or more of:
a first system message; and
a first paging message.

34. The method of claim 33, wherein the first message comprises the first system message, and the request message comprises second indication information for indicating a type of the first system message.

35. The method of claim 33 or 34, wherein the first message comprises the first paging message, and the request message comprises third indication information for indicating one or more of:
an identity of a UE associated with the first paging message; and
a length of a paging period of the first paging message.

36. The method of any one of claims 17 to 35, further comprising:
sending, by the first relay UE, the first message to the remote UE.

37. A wireless communication method, comprising:
receiving, by a network device through one or more relay user equipment (UEs), a request message sent by a remote UE, wherein the request message is used to request, from a first relay UE of the one or more relay UEs, a first message sent by the network device.

38. The method of claim 37, wherein there are multi-hop relay UEs between the remote UE and the network device, and the first relay UE is one of the multi-hop relay UEs.

39. The method of claim 38, wherein the first relay UE is a relay UE adjacent to the remote UE among the multi-hop relay UEs.

40. The method of claim 38, wherein the first relay UE is a relay UE connected to the network device through an air interface among the multi-hop relay UEs.

41. The method of claim 40, wherein the request message is transmitted based on an end-to-end connection between the remote UE and the first relay UE.

42. The method of any one of claims 38 to 40, wherein the request message received by the network device further includes identities of the one or more relay UEs and the remote UE.

43. The method of claim 37, wherein the remote UE establishes a plurality of connections with the network device through the plurality of relay UEs, and the first relay UE is one of the plurality of relay UEs.

44. The method of claim 43, wherein the first relay UE is determined based on one of:
first indication information sent by an upper layer of an access stratum of the remote UE;
access stratum information of the remote UE;
protocol predefined information;
a sequence in which the plurality of relay UEs are connected to the remote UE;
cell groups or cells associated with the plurality of relay UEs; and
an implementation of the remote UE.

45. The method of claim 44, wherein the first indication information comprises indication information for a service and/or indication information for a network slicing.

46. The method of claim 45, wherein the first indication information indicates one or more of:
whether to transmit the request message based on a relay UE corresponding to an emergency service;
a service priority corresponding to the relay UE;
a type of a network slicing corresponding to the relay UE; and
a priority of the network slicing corresponding to the relay UE.

47. The method of any one of claims 44 to 46, wherein the access stratum information indicates one or more of:
quality of links between the remote UE and the plurality of relay UEs; and
quality of links between the plurality of relay UEs and the network device.

48. The method of any one of claims 44 to 47, wherein the protocol predefined information indicates that the request message is transmitted based on the relay UE corresponding to the emergency service.

49. The method of any one of claims 37 to 48, wherein the first message comprises one or more of:
a first system message; and
a first paging message.

50. The method of claim 49, wherein the first message comprises the first system message, and the request message comprises second indication information for indicating a type of the first system message.

51. The method of claim 49 or 50, wherein the first message comprises the first paging message, and the request message comprises third indication information for indicating one or more of:
an identity of a UE associated with the first paging message; and
a length of a paging period of the first paging message.

52. The method of any one of claims 37 to 51, further comprising:
sending, by the network device, the first message to the remote UE through the one or more relay UEs, the first message comprising an identity of the one or more relay UEs.

53. A user equipment (UE), wherein the UE is a remote UE, and the remote UE comprises:
a communication module configured to send a request message to a first relay UE, wherein the request message is used to request, from the first relay UE, a first message sent by a network device.

54. The UE of claim 53, wherein there are multi-hop relay UEs between the remote UE and the network device, and the first relay UE is one of the multi-hop relay UEs.

55. The UE of claim 54, wherein the first relay UE is a relay UE adjacent to the remote UE among the multi-hop relay UEs.

56. The UE of claim 54, wherein the first relay UE is a relay UE connected to the network device through an air interface among the multi-hop relay UEs.

57. The UE of claim 56, wherein the request message is transmitted based on an end-to-end connection between the remote UE and the first relay UE.

58. The UE of claim 53, wherein the remote UE establishes a plurality of connections with the network device through a plurality of relay UEs, and the first relay UE is one of the plurality of relay UEs.

59. The UE of claim 58, wherein the first relay UE is determined based on one of:
first indication information sent by an upper layer of an access stratum of the remote UE;
access stratum information of the remote UE;
protocol predefined information;
a sequence in which the plurality of relay UEs are connected to the remote UE;
cell groups or cells associated with the plurality of relay UEs; and
an implementation of the remote UE.

60. The UE of claim 59, wherein the first indication information comprises indication information for a service and/or indication information for a network slicing.

61. The UE of claim 60, wherein the first indication information indicates one or more pieces of information of:
whether to transmit the request message based on a relay UE corresponding to an emergency service;
a service priority corresponding to the relay UE;
a type of a network slicing corresponding to the relay UE; and
a priority of the network slicing corresponding to the relay UE.

62. The UE of any one of claims 59 to 61, wherein the access stratum information indicates one or more of:
quality of links between the remote UE and the plurality of relay UEs; and
quality of links between the plurality of relay UEs and the network device.

63. The UE of any one of claims 59 to 62, wherein the protocol predefined information indicates that the request message is transmitted based on the relay UE corresponding to the emergency service.

64. The UE of any one of claims 59 to 63, wherein if the first relay UE and a target relay UE are located in different tracking areas, before the remote UE sends the request message to the first relay UE, the remote UE further comprises:
an update module configured to perform a mobility registration update;
wherein the target relay UE is a relay UE where the remote UE camps on before sending the request message.

65. The UE of any one of claims 53 to 64, wherein the first message comprises one or more of:
a first system message; and
a first paging message.

66. The UE of claim 65, wherein the first message comprises the first system message, and the request message comprises second indication information for indicating a type of the first system message.

67. The UE of claim 65 or 66, wherein the first message comprises the first paging message, and the request message comprises third indication information for indicating one or more of:
an identity of a UE associated with the first paging message; and
a length of a paging period of the first paging message.

68. The UE of any one of claims 53 to 67, wherein the communication module is further configured to receive the first message sent by the first relay UE.

69. A user equipment (UE), wherein the UE is a first relay UE, and the first relay UE comprises: a communication module configured to receive a request message sent by a remote UE, wherein the request message is used to request, from the first relay UE, a first message sent by a network device.

70. The UE of claim 69, wherein there are multi-hop relay UEs between the remote UE and the network device, and the first relay UE is one of the multi-hop relay UEs.

71. The UE of claim 70, wherein the first relay UE is a relay UE adjacent to the remote UE among the multi-hop relay UEs.

72. The UE of claim 71, wherein the communication module is further configured to send the request message to a second relay UE.

73. The UE of claim 72, wherein the request message sent by the first relay UE comprises an identity of the remote UE and/or the first relay UE.

74. The UE of claim 72 or 73, wherein the second relay UE is a relay UE adjacent to the first relay UE among the multi-hop relay UEs.

75. The UE of claim 72 or 73, wherein the second relay UE is a relay UE connected to the network device through an air interface among the multi-hop relay UEs.

76. The UE of claim 75, wherein the multi-hop relay UEs comprises a relay UE located between the first relay UE and the second relay UE, and the first relay UE transmits the request message to the second relay UE based on an end-to-end connection between the first relay UE and the second relay UE.

77. The UE of claim 70, wherein the first relay UE is a relay UE connected to the network device through an air interface among the multi-hop relay UEs.

78. The UE of claim 77, wherein the request message is transmitted based on an end-to-end connection between the remote UE and the first relay UE.

79. The UE of claim 69, wherein the remote UE establishes a plurality of connections with the network device through a plurality of relay UEs, and the first relay UE is one of the plurality of relay UEs.

80. The UE of claim 79, wherein the first relay UE is determined based on one of:
first indication information sent by an upper layer of an access stratum of the remote UE;
access stratum information of the remote UE;
protocol predefined information;
a sequence in which the plurality of relay UEs are connected to the remote UE;
cell groups or cells associated with the plurality of relay UEs; and
an implementation of the remote UE.

81. The UE of claim 80, wherein the first indication information comprises indication information for a service and/or indication information for a network slicing.

82. The UE of claim 81, wherein the first indication information indicates one or more pieces of information of:
whether to transmit the request message based on a relay UE corresponding to an emergency service;
a service priority corresponding to the relay UE;
a type of a network slicing corresponding to the relay UE; and
a priority of the network slicing corresponding to the relay UE.

83. The UE of any one of claims 80 to 82, wherein the access stratum information indicates one or more of:
quality of links between the remote UE and the plurality of relay UEs; and
quality of links between the plurality of relay UEs and the network device.

84. The UE of any one of claims 80 to 83, wherein the protocol predefined information indicates that the request message is transmitted based on the relay UE corresponding to the emergency service.

85. The UE of any one of claims 69 to 84, wherein the first message comprises one or more of:
a first system message; and
a first paging message.

86. The UE of claim 85, wherein the first message comprises the first system message, and the request message comprises second indication information for indicating a type of the first system message.

87. The UE of claim 85 or 86, wherein the first message comprises the first paging message, and the request message comprises third indication information for indicating one or more of:
an identity of a UE associated with the first paging message; and
a length of a paging period of the first paging message.

88. The UE of any one of claims 69 to 87, wherein the communication module is further configured to send the first message to the remote UE.

89. A network device, comprising:
a communication module configured to receive a request message sent by a remote UE through one or more relay UEs, wherein the request message is used to request, from a first relay UE of the one or more relay UEs, a first message sent by the network device.

90. The network device of claim 89, wherein there are multi-hop relay UEs between the remote UE and the network device, and the first relay UE is one of the multi-hop relay UEs.

91. The network device of claim 90, wherein the first relay UE is a relay UE adjacent to the remote UE among the multi-hop relay UEs.

92. The network device of claim 90, wherein the first relay UE is a relay UE connected to the network device through an air interface among the multi-hop relay UEs.

93. The network device of claim 92, wherein the request message is transmitted based on an end-to-end connection between the remote UE and the first relay UE.

94. The network device of any one of claims 90 to 92, wherein the request message received by the network device further includes identities of the one or more relay UEs and the remote UE.

95. The network device of claim 89, wherein the remote UE establishes a plurality of connections with the network device through the plurality of relay UEs, and the first relay UE is one of the plurality of relay UEs.

96. The network device of claim 95, wherein the first relay UE is determined based on one of:
first indication information sent by an upper layer of an access stratum of the remote UE;
access stratum information of the remote UE;
protocol predefined information;
a sequence in which the plurality of relay UEs are connected to the remote UE;
cell groups or cells associated with the plurality of relay UEs; and
an implementation of the remote UE.

97. The network device of claim 96, wherein the first indication information comprises indication information for a service and/or indication information for a network slicing.

98. The network device of claim 97, wherein the first indication information indicates one or more of:
whether to transmit the request message based on a relay UE corresponding to an emergency service;
a service priority corresponding to the relay UE;
a type of a network slicing corresponding to the relay UE; and
a priority of the network slicing corresponding to the relay UE.

99. The network device of any one of claims 96 to 98, wherein the access stratum information indicates one or more of:
quality of links between the remote UE and the plurality of relay UEs; and
quality of links between the plurality of relay UEs and the network device.

100. The network device of any one of claims 96 to 99, wherein the protocol predefined information indicates that the request message is transmitted based on the relay UE corresponding to the emergency service.

101. The network device of any one of claims 89 to 100, wherein the first message comprises one or more of:
a first system message; and
a first paging message.

102. The network device of claim 101, wherein the first message comprises the first system message, and the request message comprises second indication information for indicating a type of the first system message.

103. The network device of claim 101 or 102, wherein the first message comprises the first paging message, and the request message comprises third indication information for indicating one or more of:
an identity of a UE associated with the first paging message; and
a length of a paging period of the first paging message.

104. The network device of any one of claims 89 to 103, wherein the communication module is further configured to send the first message to the remote UE through the one or more relay UEs, and the first message comprises an identity of the one or more relay UEs.

105. A user equipment (UE) comprising a transceiver, a processor and a memory for storing a program, wherein the processor is configured for invoking the program stored in the memory and controlling the transceiver to receive or send a signal, to cause the UE to perform the method of any one of claims 1 to 16, or the method of any one of claims 17 to 36.

106. A network device comprising a transceiver, a processor and a memory for storing a program, wherein the processor is configured for invoking the program stored in the memory and controlling the transceiver to receive or send a signal, to cause the network device to perform the method of any one of claims 37 to 52.

107. An apparatus, comprising a processor that invokes a program from a memory to cause the apparatus to perform the method of any one of claims 1 to 16, the method of any one of claims 17 to 36, the method of any one of claims 37 to 52.

108. A chip, comprising a processor that invokes a program from a memory to cause a device on which the chip is mounted to perform the method of any one of claims 1 to 16, the method of any one of claims 17 to 36, or the method of any one of claims 37 to 52.

109. A computer-readable storage medium for storing a program that causes a computer to perform the method of any one of claims 1 to 16, the method of any one of claims 17 to 36, or the method of any one of claims 37 to 52.

110. A computer program product comprising a program that causes a computer to perform the method of any one of claims 1 to 16, the method of any one of claims 17 to 36, or the method of any one of claims 37 to 52.

111. A computer program that causes a computer to perform the method of any one of claims 1 to 16, the method of any one of claims 17 to 36, or the method of any one of claims 37 to 52.
